# EUROPÄISCHE PATENTSCHRIFT

(11) **EP 2 005 259 B1**
(45) Veröffentlichungstag und Bekanntmachung des Hinweises auf die Patenterteilung: **16.01.2013**
(21) Anmeldenummer: 07728035.2
(22) Anmeldetag: 12.04.2007
(51) Int. Cl.: G03H 1/22, G03H 1/08

(54) **VERFAHREN ZUM RENDERN UND GENERIEREN COMPUTER-GENERIERTER VIDEOHOLOGRAMME IN ECHTZEIT**
METHOD FOR RENDERING AND GENERATING COMPUTER-GENERATED VIDEO HOLOGRAMS IN REAL-TIME
PROCÉDÉ DE RESTITUTION ET DE GÉNÉRATION D'HOLOGRAMMES VIDÉO GÉNÉRÉS PAR INFORMATIQUE EN TEMPS REEL

(30) Priorität: 13.04.2006 DE 102006018689
(43) Veröffentlichungstag der Anmeldung: 24.12.2008
(73) Patentinhaber: SeeReal Technologies S.A., 5365 Munsbach (LU)
(72) Erfinder: SCHWERDTNER, Alexander, 01307 Dresden (DE)
(74) Vertreter: Bradl, Joachim
(86) Internationale Anmeldenummer: PCT/EP2007/053568
(87) Internationale Veröffentlichungsnummer: WO 2007/118842

(56) Entgegenhaltungen:
- WO-A-2006/066906
- US-B1- 6 549 308
- HAIST T ET AL: "Computer-generated holograms from 3D-objects written on twisted-nematic liquid crystal displays" OPTICS COMMUNICATIONS, NORTH-HOLLAND PUBLISHING CO. AMSTERDAM, NL, Bd. 140, Nr. 4-6, 1. August 1997 (1997-08-01), Seiten 299-308, XP004082641 ISSN: 0030-4018
- CAMERON C D ET AL: "COMPUTATIONAL CHALLENGES OF EMERGING NOVEL TRUE 3D HOLOGRAPHIC DISPLAYS" PROCEEDINGS OF THE SPIE, SPIE, BELLINGHAM, VA, US, Bd. 4109, 31. Juli 2000 (2000-07-31), Seiten 129-140, XP008000305 ISSN: 0277-786X

## Beschreibung

### Gebiet der Erfindung

Die Erfindung betrifft ein Verfahren zum Rendern und Generieren computer-generierter Videohologramme CGVH aus dreidimensionalen Bilddaten mit Tiefeninformation in Echtzeit.
Im Bereich des Renderns betrifft die Erfindung die so genannte 3D-Rendering-Pipeline oder Grafikpipeline, welche die Algorithmen von der vektoriellen, mathematischen Beschreibung einer 3D-Szene zum gerasterten Bild auf dem Monitor umfasst. Die dreidimensionalen Bilddaten beinhalten Tiefeninformation sowie in der Regel zusätzliche Beschreibungen zu Material- und Oberflächeneigenschaften.
Im Bereich der Generierung holographischer Daten betrifft die Erfindung die Transformation von Teilbereichen der Szene, wobei durch die Transformation die Ausbreitung der Lichtwellen propagiert wird.
Bei der holographischen Darstellung der 3D-Objekte oder 3D-Szenen wird die Lichtwellenfront durch die Interferenz und Überlagerung kohärenter Lichtwellen generiert.

Im Gegensatz zu klassischen Hologrammen, die als Interferenzmuster photographisch oder auf andere Weise gespeichert sind, existieren CGVH als Ergebnis der Berechnung von Hologrammdaten aus Sequenzen einer dreidimensionalen Szene und ihrer Speicherung mit elektronischen Mitteln.
Moduliertes interferenzfähiges Licht breitet sich im Raum vor den Augen eines Betrachters als eine durch die Amplituden- und/oder Phasenwerte steuerbare Lichtwellenfront zur Rekonstruktion einer dreidimensionalen Szene aus. Dabei bewirkt das Ansteuern eines Lichtmodulatormittels beziehungsweise Spatial-Light-Modulators SLM mit den Hologrammwerten der Videohologramme, dass das vom Displayschirm ausgehende, in Pixeln modulierte Wellenfeld durch Interferenzen in den Raum die gewünschte dreidimensionale Szene rekonstruiert.

Eine holographische Anzeigeeinrichtung enthält typischerweise eine Anordnung steuerbarer Pixel, wobei die Pixel durch elektronisches Beeinflussen der Amplitude und/oder Phase von beleuchtendem Licht Objektpunkte rekonstruieren. Eine solche Anordnung ist eine Form eines Spatial Light Modulators SLM oder generalisiert von Lichtmodulatormittein. Das Display kann auch kontinuierlich statt matrixförmig sein. Es kann beispielsweise ein kontinuierlicher SLM sein, einschließlich eines kontinuierlichen SLM mit Matrixsteuerung oder eines akusto-optischen Modulators AOM. Eine geeignete Anzeigeeinrichtung zur Rekonstruktion von Videohologrammen durch räumliche Amplitudenmodulation eines Lichtmusters ist beispielsweise ein Flüssigkristalldisplay LCD. Die Erfindung kann jedoch ebenso auf andere steuerbare Einrichtungen angewendet werden, welche kohärentes Licht nutzen, um eine Lichtwellenfront zu modulieren.

In diesem Dokument bezeichnet der Begriff Pixel' ein steuerbares Hologrammpixel im SLM; ein Pixel wird durch einen diskreten Wert eines Hologrammpunkts einzeln adressiert und angesteuert. Jedes Pixel stellt einen Hologrammpunkt des Videohologramms dar. Bei einem LCD wird daher der Begriff 'Pixel' für die einzeln adressierbaren Bildpunkte des Bildschirms verwendet. Bei einem DLP wird der Begriff 'Pixel' für einen einzelnen Mikrospiegel oder eine kleine Gruppe von Mikrospiegeln verwendet. Bei einem kontinuierlichen SLM ist ein Pixel die Übergangsregion auf dem SLM, die einen komplexen Hologrammpunkt repräsentiert. Der Begriff ,Pixel' bezeichnet daher ganz allgemein die kleinste Einheit, die einen komplexen Hologrammpunkt repräsentieren, also anzeigen kann.

### Technischer Hintergrund und Stand der Technik

Die computer-generierten Videohologramme können beispielsweise mit einer holographischen Anzeigeeinrichtung rekonstruiert werden, die der Anmelder bereits in der Druckschrift W02004/044659 beschrieben hat. Dazu blickt der Betrachter durch mindestens ein entsprechendes virtuelles Betrachterfenster, das größer als eine Augenpupille ist, zum Displayschirm.

Ein 'Betrachterfenster' ist ein begrenzter virtueller Bereich, durch welchen der Betrachter die gesamte rekonstruierte 3D-Szene mit ausreichend großer Sichtbarkeit ansehen kann. Das Betrachterfenster befindet sich auf den oder nahe der Augen des Betrachters. Das Betrachterfenster kann in die Richtungen X, Y und Z bewegt werden. Innerhalb des Betrachterfensters überlagern sich die Wellenfelder so, dass das rekonstruierte Objekt für den Betrachter sichtbar wird. Die Fenster liegen in Augennähe des Betrachters, können mit bekannten Positionserkennungs- und Nachführeinrichtungen der aktuellen Betrachterposition nachgeführt werden. Damit können sie vorteilhaft auf eine Größe, die wenig über der Pupillengröße liegt, begrenzt werden. Es ist möglich, zwei Betrachterfenster zu verwenden, nämlich eines für jedes Auge. Aufwändigere Anordnungen von Betrachterfenstern sind ebenfalls möglich. Es ist ferner möglich, Videohologramme zu kodieren, die Objekte oder ganze Szenen enthalten, die der Betrachter hinter dem SLM sieht.

Der Begriff 'Transformation' ist so weit auszulegen, dass er jede mathematische oder rechnerische Technik einschließt, die einer Transformation gleichkommt oder sich dieser annähert. Transformationen im mathematischen Sinne sind lediglich Annäherungen physischer Prozesse, die genauer durch die Maxwellschen Wellenausbreitungsgleichungen beschrieben werden. Transformationen wie etwa Fresneltransformationen oder die spezielle Gruppe von Transformationen, die als Fouriertransformationen bekannt sind, beschreiben Annäherungen zweiter Ordnung. Transformationen führen in der Regel auf algebraische und nicht differentielle Beschreibungen und können folglich rechentechnisch effizient und performant gehandhabt werden. Überdies können sie präzise in optischen Systeme eingesetzt werden.

WO 2006/066919 des Anmelders beschreibt ein Verfahren zum Berechnen von computer-generierten Videohologrammen. Es ordnet Objekte mit komplexen Amplitudenwerten einer dreidimensionalen Szene in Rasterpunkten von parallelen, virtuellen Schnittebenen zu, um zu jeder Schnittebene einen separaten Objektdatensatz mit diskreten Amplitudenwerten in Rasterpunkten zu definieren und aus den Bilddatensätzen eine holographische Kodierung für eine Lichtmodulatormatrix einer holographischen Anzeigeeinrichtung zu berechnen.

Die Lösung der Aufgabe ist in Anspruch 1 definiert und nutzt gemäß der Erfindung den Grundgedanken, computergestützt die folgenden Schritte durchzuführen:
- aus jedem Objektdatensatz jeder tomographischen Szenenschnittfläche wird ein Beugungsbild in Form einer separaten zweidimensionalen Verteilung von Welfenfeldern für eine Betrachterebene mit einem endlichen Abstand parallel zu den Schnittebenen berechnet, wobei die Wellenfelder aller Schnitte für mindestens ein gemeinsames virtuelles Fenster, das Betrachterfenster, berechnet werden, das in der Betrachterebene nahe den Augen eines Betrachters liegt und dessen Fläche gegenüber dem Videohologramm reduziert ist,
- die berechneten Verteilungen aller Schnittebenen werden zur Beschreibung eines gemeinsamen Wellenfeldes für das Fenster in einem zur Betrachterebene referenzierten Datensatz addiert und
- der Referenzdatensatz wird zum Erzeugen eines Hologrammdatensatzes für ein gemeinsames computer-generiertes Hologramm der Szene in eine von der Referenzebene endlich entfernte, parallele Hologrammebene transformiert, wobei in der Hologrammebene die Lichtmodulatormatrix liegt, mit welcher nach entsprechender Kodierung die Szene in den Raum vor den Augen des Betrachters rekonstruiert.

Den genannten Verfahren und holographischen Anzeigeeinrichtungen liegt dabei der Gedanke zugrunde, nicht das Objekt der Szene zu rekonstruieren, sondern vorrangig jene Wellenfront, die das Objekt aussenden würde, in ein oder mehrere Betrachterfenster zu rekonstruieren.

Durch die virtuellen Betrachterfenster kann der Betrachter die Szene sehen. Die virtuellen Betrachterfenster werden mit bekannten Positionserkennungs- und Nachführeinrichtungen der aktuellen Betrachterposition nachgeführt.
Zwischen dem Lichtmodulatormittel der holographischen Anzeigeeinrichtung und den Betrachterfenstern ist ein virtueller pyramidenstumpfförmiger Betrachterbereich, das so genannte Frustum, aufgespannt, wobei der SLM die Grundfläche und das Betrachterfenster die Spitze bildet. Bei sehr kleinen Betrachtertenstern kann der Pyramidenstumpf als Pyramide angenähert werden. Der Betrachter sieht durch die virtuellen Betrachterfenster in Richtung des Displays und nimmt im Betrachterfenster die Wellenfront auf, welche die Szene repräsentiert.

### Aufgabe der Erfindung

Aufgabe der Erfindung ist es, ein Verfahren zu schaffen, welches erlaubt, in Echtzeit Videohologramme aus dreidimensionalen Bilddaten mit Tiefeninformation zu generierten.
Dabei sollen insbesondere derzeit verfügbarere Graphikprozessoren und Grafik-Subsysteme, beispielsweise für Graphikkarten und Spielekonsolen eingesetzt werden. Ohne Beschränkung der Allgemeinheit sollen derzeitige festgelegte Industriestandards bezüglich Hardware, Software und Programmschnittstellen verwendet werden.

### Zusammenfassung der Erfindung

Das erfindungsgemäße Verfahren wird nachfolgend in den Grundgedanken dargestellt, wobei auf Optimierungen verzichtet wird. Ausgangspunkt des Verfahrens sind dreidimensionale Bilddaten mit Tiefeninformation. Diese Information liegt beispielsweise als dreidimensionale Beschreibung in Form von Vertices, Normalenvektoren und Matrizen vor. Die Bilddaten enthalten in der Regel zusätzliche Beschreibungen zu Material- und Oberflächeneigenschaften und dergleichen.

Eine so genannte 3D-Rendering-Pipeline oder Grafikpipeline beschreibt beim Echtzeitrendering den Weg von der vektoriellen, mathematischen Beschreibung einer 3D-Szene zu gerasterten Bilddaten in einem Framebuffer zur Darstellung auf einem Monitor. In der Pipeline erfolgt beispielsweise die Umrechnung von Bildschirmkoordinaten in Gerätekoordinaten, Texturierung, Clipping, sowie das Antialiasing. Das gerasterte Bild, eine 2D-Projektion der 3D-Szene, das im Framebuffer eines Grafikadapters gespeichert wird, enthält nunmehr die Daten der Pixelwerte für die steuerbaren Pixel eines Monitors, beispielsweise eines LCD-Displays.

Zur holographischen Darstellung wird durch Phasen- und/oder Amplitudenmodulation interferenzfähigen Lichts die dreidimensionale Szene durch Überlagerung von Interferenzmustern rekonstruiert.
Auch für das Generieren der Videohologramme aus dreidimensionalen Bilddaten mit Tiefeninformation wird in einem ersten Verfahrenschritt diese Graphikpipeline verwendet. Anschließend basiert die Generierung holographischer Daten auf einer Transformation der Szene, wobei die Transformation die Ausbreitung der Lichtwellen propagiert. Nach einer Rücktransformation erfolgt das Kodieren, wobei komplexe Hologrammwerte in Pixelwerte für das beziehungsweise die Lichtmodulatormittel der holographischen Anzeigeeinrichtung umgewandelt werden.

Der Erfindung liegt der Gedanke zugrunde, dass das 3D-Rendering sowie die holographische Hin- und Rücktransformation und die Kodierung nicht getrennt durch Graphikprozessor und Rechenprozessor stattfinden, sondern dass beide Verfahrensgruppen von einem oder mehreren Graphikprozessoren ausgeführt werden. Die gesamte Ausführung der Verfahrensschritte findet auf dem Grafik-Subsystem statt, das als Hauptkomponenten im Wesentlichen Graphikprozessor, Speichermedien und Schnittstellen umfasst. Erfindungsgemäß soll damit erreicht werden, dass die höhere Leistung derzeit verfügbarer Graphikprozessoren gegenüber verfügbaren Rechenprozessoren vorteilhaft genutzt wird. Überdies können aufwändige Datenübertragungen zwischen dem Grafik-Subsystem und anderen externen Schnittstellen vermieden werden.

Nachfolgend werden die genannten Verfahrenschritte weiterführend erläutert.

Durch die Position eines Betrachters und dessen Blickrichtung ist eine Ansicht einer dreidimensionalen Szene festgelegt. Dem Betrachter ist mindestens ein in einer Referenzebene nahe den Augen liegendes virtuelles Betrachterfenster zugeordnet.

Die Bilddaten liegen als dreidimensionale Beschreibung mit Tiefeninformation vor.
In der Regel ist die Farbe der Objekte als auch die Struktur der Oberflächen festgelegt. Im Weitern sind Materialeigenschaften und Lichtquellen modelliert oder durch Hilfsalgorithmen erstellt.

In einem vorbereitenden Verfahrensschritt wird gemäß der Blickrichtung des Betrachters die Rotation, Skalierung, Translation durchgeführt und die Sichtbarkeit der Szene berechnet. Im Weiteren werden mit Hilfe eines Befeuchtungsmodells alle nötigen Informationen über die Art des Lichts und dessen Verteilung berechnet. Damit wird gewährleistet, dass bei den nachfolgenden Schritten zur Generierung der holographischen Daten nicht wiederholt eine Koordinaten- und Beleuchtungsberechnung erfolgen muss. Diese Berechnungen sind aufwändig und würden bei komplexen Szenen die Performanz des Gesamtsystems negativ beeinflussen.

In einem ersten Verfahrensschritt erfolgt das 3D-Rendern sowie das Generieren der Tiefenmap. Die Szenedaten werden dabei durch zwei parallele Schnittebenen in Schichten geteilt. Die Ebenen sind senkrecht zur Blickrichtung des Betrachters und der Abstand zwischen den Schnittebenen ist dabei so hinreichend klein gewählt, dass einerseits die Berechnungsgenauigkeit aber auch die Perfomanz des Verfahrens gewährleist ist. Idealerweise sollte der Abstand sehr klein sein, so dass nur Tiefeninformationen, welche sich in einem konstanten Abstand zum Betrachter befinden, in den Berechnungen berücksichtigt werden müssen. Ist der Abstand zwischen den *Ebenen* größer, so werden die Tiefeninformationen geeignet gewählt, beispielsweise als Abstandsmittelwert der beiden Ebenen festgelegt und einer Schicht zugeordnet. Die Szeneschnittdaten einer Schicht werden nun gerendert und die Tiefenmap generiert.

Im nachfolgenden Verfahrensschritt erfolgt das Transformieren der Szeneschnittdaten. In der allgemeinsten Form wird bei einer Transformation die Ausbreitung der Lichtwellen in das virtuelle Betrachterfenster propagiert.
Die einfachsten Transformationen liegen dabei als Fourier- oder FresnelTransformationen vor. Die Fourier-Transformation wird vorzugsweise im Fernbereich verwendet, wo aufgrund des größeren Abstands zum Betrachter die Lichtwellen als ebene Wellenfront interpretiert werden können. Die Fourier-Transformation weist im Vergleich zu anderen Transformationen den Vorteil auf, dass sich die Transformation durch optische Elemente - und umgekehrt - modellieren lässt.
Im Nahbereich einer Kugelwelle wird vorzugsweise eine Fresnef-Transformation verwendet. Den Transformationen liegt durch die Schnittebenen die implizierte konstante z-Koordinate zugrunde. Beispielsweise wird die z-Koordinate einer der beiden Ebenen oder der daraus gebildete Mittelwert zugrunde gelegt.

In weiterer Folge werden die genannten Schritte des 3D-Renderns und Transformierens so lange wiederholt, bis nach einem sukzessiven Verschieben der Schnittebenen in Blickrichtung die gesamte Szene transformiert ist. Die transformierten Daten der Szeneschichtdaten werden dabei sukzessive zu einem gemeinsamen Referenzdatensatz aufaddiert. Nach der Transformation der gesamten Szene repräsentiert dieser Referenzdatensatz die Summe der Transformationen der einzelnen Szeneschnittdaten.

In einem nächsten Verfahrensschritt erfolgt das Rücktransformieren, wobei die Referenzdaten in eine endlich entfernte, parallele Hologrammebene am Ort eines Lichtmodulatormittels zu Hologrammdaten für das Videohologramm transformiert werden.

Im letzen Verfahrensschritt erfolgt das Kodieren, wobei nach einer Normierung die Umwandlung in Pixelwerte erfolgt. Im Falle der Burckhardt-Kodierung wird der komplexe Hologrammwert durch drei Werte repräsentiert, die jeweils in den Wertebereich 0 bis 1 normiert sind, wobei der durch 1 repräsentierte Wert den maximal erzielbaren Komponentenwert begrenzt. Diese Werte werden anschließend in diskrete Werte umgewandelt und bilden durch diskretisierte Graustufen die Steuerintensitäten für die Pixel des Lichtmodulatormittels. Die Anzahl der Diskretisierungsstufen hängt sowohl von den Eigenschaften der Graphikkarte als auch dem verwendeten Display ab. Meist haben sie eine Auflösung von 8 Bit mit 256 Stufen. Weitere Auflösungen mit 10 Bit und darüber hinaus sind möglich.
Eine weitere bevorzugte Kodierung ist die Zweiphasen-Kodierung.

Wird eine Kodierung gewählt, welche keine analytische, sondern nur eine iterative Lösung zulässt, so werden in einer speziellen Ausführungsform des Verfahrens die Schritte 3D-Rendern bis Kodieren so lange wiederholt, bis die optimale Lösung, welche sich durch minimales Signalrauschen auszeichnet, hinreichend approximiert ist.

Die kodierten Pixelwerte werden nunmehr in einem Framebuffer an den Lichtmodulator übermittelt, welche nunmehr durch Phasen- und/oder Amplitudenmodulation interferenzfähigen Lichts die dreidimensionale Szene durch Überlagerung von Interferenzmustern rekonstruiert.

Für die Generierung farbiger Bildinhalte wird das Verfahren analog für jede einzelne Farbkomponente angewendet. Um das Videohologramm darzustellen, kann jedes Pixel Subpixel für die Darstellung oder Anzeige der farbigen Hologrammpunkte in jeder der drei Grundfarben enthalten. Abhängig von der Art der Kodierung des Videohologramms können weitere Subpixel zum Darstellen der Grundfarben eines jeden farbigen Hologrammpunkts vorhanden sein.

Das erfindungsgemäße Verfahren erlaubt somit, auf verfügbarere Graphikprozessoren und Grafik-Subsystemen, wie sie beispielsweise für Graphikkarten und Spielekonsolen eingesetzt werden, in Echtzeit Videohologramme aus dreidimensionalen Bilddaten mit Tiefeninformation zu generierten.

### Bevorzugte Ausführungsformen der Erfindung

Weitere Aspekte und Detaillierungen der Erfindung werden in den nachfolgenden Ausführungsbeispielen und anhand der beigefügten Figuren erläutert.

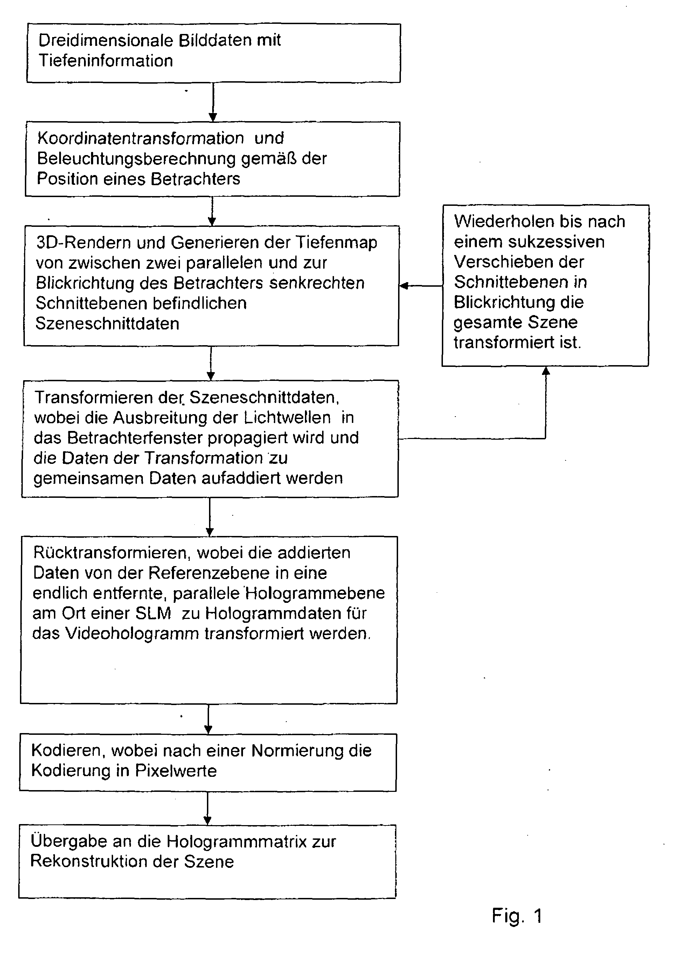

Fig. 1 zeigt ein Ablaufschema des Verfahrens. Dem Verfahren sind dreidimensionale Bilddaten mit Tiefeninformation zugrunde gelegt. Durch die Position eines Betrachters und dessen Blickrichtung ist eine Ansicht einer Szene festgelegt.

Einem Betrachter ist mindestens ein in einer Referenzebene nahe den Augen liegendes virtuelles Betrachterfenster zugeordnet. Gemäß der Blickrichtung des Betrachters erfolgt in einem vorbereitenden Verfahrensschritt eine Koordinatentransformation und eine Beleuchtungsberechnung der Szene. Gegebenenfalls erfolgen weitere Schritte um eine verbesserte Darstellung der Szene zu gewährleisten. Diese Schritte erfolgen ebenso wie die nachfolgenden Schritte auf dem Graphik-Subsystem.
Zuerst erfolgt das 3D-Rendern und Generieren der Tiefenmap von zwischen zwei parallelen und zur Blickrichtung des Betrachters senkrechten Schnittebenen befindlichen Szeneschnittdaten. Anschließend erfolgt das Transformieren der Szeneschnittdaten, wobei die Ausbreitung der Lichtwellen in das in der Referenzebene liegende virtuelle Betrachterfenster propagiert wird. Die transformierten Daten der Szeneschnittdaten werden einem gemeinsamen Datensatz aufaddiert. In diesem Ausführungsbeispiel wird eine Fourier-Transformation verwendet, welche durch den Fast-Fourier-Transformations-Algorithmus numerisch durchgeführt wird. Die zur Durchführung der Transformation wesentlichen numerischen Operationen, die im Wesentlichen aus Multiplikation und Addition, Wiederholungen und bedingte Anweisungen zusammensetzbar sind, werden auf einem programmierbaren Shader implementiert und davon durchgeführt.
Nach dem Wiederholen der Schritte 3D-Rendern und Transformieren, bis nach einem sukzessiven Verschieben der Schnittebenen in Blickrichtung die gesamte Szene transformiert ist, erfolgt das Rücktransformieren hier ebenfalls mit Fourier-Transformation. Die verwendete inverse Transformation wird analog der HinTransformation auf dem programmierbaren Shader implementiert und ausgeführt.
Bei der Rücktransformation, werden die addierten Daten von der Referenzebene in eine endlich entfernte, parallele Hologrammebene am Ort eines Lichtmodulatormittels zu Hologrammdaten für das Videohologramm transformiert.
Schließlich erfolgt das Kodieren, wobei nach einer Normierung die Kodierung in Pixelwerte und die Übergabe in einem Framebuffer an das Lichtmodulatormittel zur Rekonstruktion der dreidimensionalen Szene erfolgt. Diese vergleichsweise zur Transformation einfachen Rechenoperationen werden im einfachsten Fall ebenfalls auf dem programmierbaren Shader implementiert und ausgeführt.

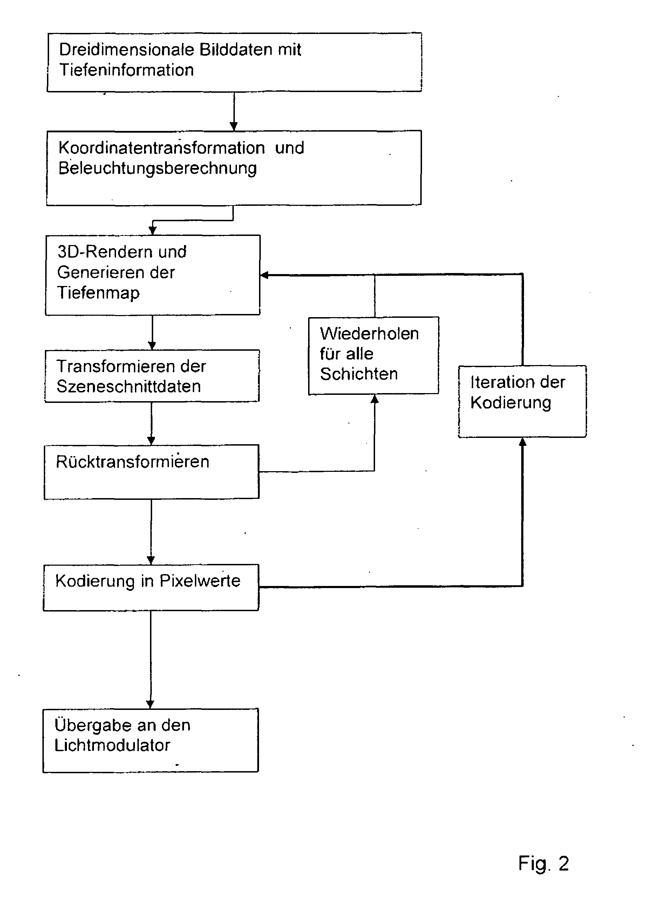

Fig. 2 zeigt ein Ablaufschema des Verfahrens für den Spezialfall einer iterativen Lösung. Die grundlegenden Schritte Sichtbarkeits- und Beleuchtungsberechnung der Szene, 3D-Rendern und Generieren der Tiefenmap, Transformation der Addition der transformierten Szeneschichtdaten, Rücktransformation und Kodierung sind analog dem ersten Ausführungsbeispiel aufgebaut und implementiert. Diesem Ausführungsbeispiel liegt der Gedanke zugrunde, dass eine analytische Berechnung der Kodierung der Pixelwerte nicht möglich ist. Somit werden die Schritte 3D-Rendern bis Kodierung iterativ gelöst. Die berechneten kodierten Pixelwerte, also Phase und/oder Amplitude, gehen dabei als Startlösungen die Hin- und Rücktransformationen des nachfolgenden Iterationsschrittes ein. Die Iteration wird so lange wiederholt, bis die durch minimales Signalrauschen charakterisierte optimale Lösung hinreichend approximiert ist. Weitere Abbruchkriterien oder Festlegungen der optimalen Lösung können unter Beachtung der verwendeten Transformationen und numerischen Algorithmen bestimmt werden.

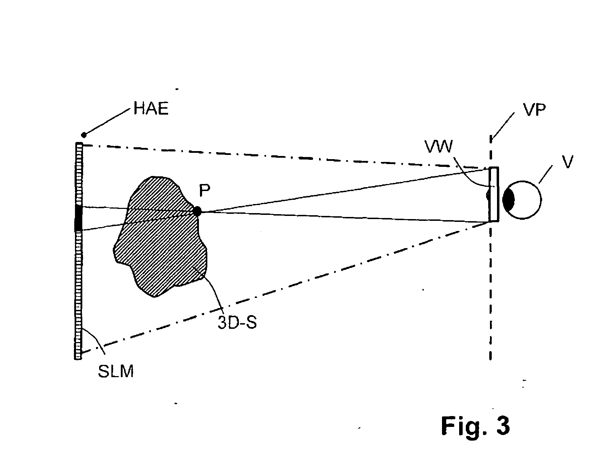

Fig. 3 veranschaulicht das zugrunde liegende Prinzip einer bevorzugten holographischen Anzeigeeinrichtung (HAE), womit die nach dem erfindungsgemäßen Verfahren generierten Videohologramme dargeboten werden können. Ein durch seine Betrachteraugen repräsentierter Betrachter blickt durch virtuelle Betrachterfenster (VW) auf eine holographische Anzeigeeinrichtung (HAE). Die Einrichtung enthält Lichtmodulatormittel (SLM). Einer derartigen holographischen Anzeigeeinrichtung liegt das Prinzip zugrunde, vorrangig jene Wellenfront, die ein Objekt aussenden würde, in ein oder mehrere virtuelle Betrachterfenster (VVV) in der Betrachterebene (VP) zu rekonstruieren.

## Patentansprüche

1. Verfahren zum Rendern und Generieren computer-generierter Videohologramme aus dreidimensionalen Bilddaten mit Tiefeninformation in Echtzeit für eine holographische Anzeigeeinrichtung (HAE), die ein Lichtmodulatormittel (SLM) enthält und jene Wellenfront, die ein Objekt aussenden würde, in Richtung von Betrachteraugen rekonstruiert, wobei durch die Position eines Betrachters und dessen Blickrichtung eine Ansicht einer Szene (3D-S) festgelegt ist, wobei dem Betrachter mindestens ein in einer Betrachterebene nahe den Augen liegendes virtuelles Betrachterfenster (VW) zugeordnet ist und in einem vorbereitenden Verfahrensschritt gemäß der Blickrichtung Koordinatentransformationen und Beleuchtungsberechnungen der Szene erfolgen, umfassend die nachfolgenden Verfahrensschritte:
-- Schritt 1: 3D-Rendern und Generieren einer Tiefenmap von Szeneschnittdaten, die sich in einer Schicht zwischen zwei parallelen und zur Blickrichtung des Betrachters senkrechten Schnittebenen befinden, wobei die Szeneschnittdaten zusätzliche Beschreibungen zu Material- und Oberflächeneigenschaften aufweisen,
-- Schritt 2: Transformieren der Daten der gewonnenen Tiefenmap in das virtuelle Betrachterfenster (VW) durch eine Fouriertransformation, wobei der Transformation eine Ausbreitung der Lichtwellen von der Szene in das Betrachtungsfunster zugrunde Liegt
-- Schritt 3 : Wiederholen der Schritte 3D-Rendern und Transformieren unter sukzessivem Verschieben der Schnittebenen in Blickrichtung bis die gesamte Szene transformiert ist, wobei die transformierten Daten der einzelnen Transformationen der Tiefenmap zu einem gemeinsamen Referenzdatensatz aufaddiert werden,
-- Schritt 4 : Rücktransformieren, wobei die addierten Referenzdaten von der Betrachterebene in eine endlich entfernte, parallele Hologrammebene am Ort des Lichtmodulatormittels (SLM) zu komplexen Hologrammdaten für das Videohologramm durch eine inverse Fouriertransformation rücktransformiert werden, und
-- Schritt 5 : Kodieren, wobei nach einer Normierung der Hologrammdaten deren Kodierung in Pixelwerte und die Übergabe der Pixelwerte in einem Framebuffer an der Lichtmodulator mittel erfolgen,
wobei die Verfahrensschritte auf einem Grafik-Subsystem durch einen oder mehrere Graphikprozessoren ausgeführt werden.

2. Verfahren nach Anspruch 1, wobei die Verfahrensschritte 3D-Rendern, Transformation, Rücktransformation und Kodierung auf einem programmierbaren standardisierten Shader implementiert sind und darauf ablaufen.

3. Verfahren nach Anspruch 1, wobei das 3D-Rendern und die Transformation nur für Konturen der Szene (3D-S) durchgeführt werden.

4. Verfahren nach Anspruch 1, wobei das Verfahren bei einer Farbdarstellung für jede Grundfarbe angewendet wird.

5. Verfahren nach Anspruch 1, wobei beim Transformieren in die Betrachterebene ein durch die Schnittebenen implizierter konstanter Abstand der Szeneschnittdaten zur Betrachterebene zugrunde liegt.

6. Verfahren nach Anspruch 1 für eine iterative Lösung der Transformation und Kodierung, wobei die Verfahrensschritte 1 bis 3 solange wiederholt werden, bis eine optimale Lösung in form von minimalen Signalrauschen hinreichend approximiert ist.

## Claims

1. Method for rendering and generating of computer-generated video holograms from three-dimensional image data with depth information in real-time, for a holographic display device (HAE), which comprises a light modulator means (SLM), and which reconstructs that wave front that would be emitted by an object towards observer eyes, where the position and viewing direction of an observer defines a view of the scene (3D-S), where the observer is assigned with at least one virtual observer window (VW), which is situated in an observer plane near the observer eyes, and where in a preparatory process step coordinate transformations and illumination calculations of the scene are carried out considering the viewing direction, comprising the following process steps:
- Step 1: 3D rendering and generation of a depth map of scene section data being located in a layer between two parallel section planes, which are disposed perpendicularly to the viewing direction of the observer, the scene section data comprising additional description of material characteristics and surface characteristics,
- Step 2: transformation of the data of the obtained depth map into the virtual observer window (VW) by a Fourier transformation, where the transformation is based on a propagation of the light waves from the scene into the observer window (VW),
- Step 3: repetition of the steps of 3D rendering and transformation, while successively displacing the section planes in the viewing direction, until the entire scene is transformed, where the transformed data of the single transformations of the depth map are added to a common reference data set,
- Step 4: back-transformation, where the added reference data from the viewing plane are back-transformed via an inverse Fourier transformation from the observer plane into a hologram plane at the position of the light modulator means (SLM), and which is situated at a finite distance and parallel to the observer plane, so to generate complex hologram data for the video hologram,
- Step 5: encoding, where after a normalisation of the hologram data the ecoding to pixel values and the transfer of the pixel values in a frame buffer to the light modulator means is carried out,
where the process steps are executed on a graphics sub-system by one or multiple graphics processors.

2. Method according to claim 1, where the process steps of 3D rendering, transformation, back-transformation and encoding are implemented on a programmable standardised shader and are executed on the same.

3. Method according to claim 1, where the 3D rendering and the transformation are only performed for outlines of the scene (3D-S).

4. Method according to claim 1, where the method is applied for a colour representation to each primary colour.

5. Method according to claim 1, where the transformation into the observer plane is based on a constant distance, which is implied by the distance between the section planes to the observer plane.

6. Method according to claim 1 for an iterative solution of the transformation and encoding, where the method steps 1 to 3 are repeated until an optimum solution, which is **characterised by** minimum signal noise, is sufficiently approximated.

## Revendications

1. Procédé de restitution et de génération d'hologrammes vidéo générés par ordinateur à partir de données d'image en trois dimensions avec des informations en profondeur en temps réel pour un dispositif d'affichage holographique (HAE), qui comporte un modulateur spatial de lumière (SLM) et reconstruit ce front d'onde, qui émettrait un objet, en direction des yeux de l'observateur, dans lequel une vue d'une scène (3D-S) est fixée par la position d'un observateur et de sa direction de regard, dans lequel au moins une fenêtre de visualisation virtuelle (VW) se trouvant près des yeux dans un plan de l'observateur est associée à l'observateur et dans une étape de procédé de préparation suivant le sens du regard se produisent des transformations de coordonnées et des calculs de l'éclairage de la scène, comprenant les étapes de procédé suivantes .
-- étape 1 : restitution en 3D et génération d'une carte en profondeur de données de découpe de scène qui se trouvent dans une couche entre deux plans de coupe parallèles et perpendiculaires à la direction de regard de l'observateur, les données de découpe de la scène présentant des descriptions complémentaires aux propriétés de la matière et des surfaces,
-- étape 2 : transformation des données de la carte en profondeur obtenue dans la fenêtre de visualisation virtuelle (VW) par une transformation de Fourier, une propagation des ondes lumineuses de la scène dans la fenêtre de visualisation étant sous-jacente à la transformation,
-- étape 3 : répétition des étapes de restitution en 3D et de transformation avec décalage successif des plans de coupe dans la direction du regard jusqu'à ce que toute la scène soit transformée, les données transformées des différentes transformations de la carte en profondeur étant additionnées à un ensemble de données de référence commun,
-- étape 4 : re-transformation, dans laquelle les données de référence additionnées du plan de l'observateur sont retransformées, dans un plan d'hologramme parallèle, éloigné de façon limitée, à l'emplacement du modulateur spatial de lumière (SLM), en données d'hologramme complexes pour l'hologramme vidéo par une transformation de Fourier inverse, et
-- étape 5 : codage, dans lequel après une normalisation des données d'hologramme, leur codage en valeurs de pixels et la transmission des valeurs de pixels dans une mémoire d'images se produisent au niveau du moyen formant modulateur de lumière,
dans lequel les étapes du procédé sont réalisées sur un sous-système graphique par un ou plusieurs processeurs graphiques.

2. Procédé selon la revendication 1, dans lequel les étapes du procédé, restitution en 3D, transformation, re-transformation et codage sont mises en oeuvre sur un shader programmable normalisé et s'y déroulent.

3. Procédé selon la revendication 1, dans lequel la restitution en 3D et la transformation ne sont exécutées que pour les contours de la scène (3D-S).

4. Procédé selon la revendication 1, dans lequel le procédé est appliqué dans une représentation en couleur pour chaque couleur primaire.

5. Procédé selon la revendication 1, dans lequel lors de la transformation dans le plan de l'observateur, un intervalle constant impliqué par les plans de coupe est sous-jacent aux données de découpe de scène par rapport au plan de l'observateur.

6. Procédé selon la revendication 1 pour une solution itérative de la transformation et du codage, dans lequel les étapes 1 à 3 du procédé sont répétées jusqu'à ce qu'une solution optimale sous la forme d'un bruit du signal minimum soit obtenue de façon suffisante.
